# EUROPÄISCHE PATENTANMELDUNG

(11) **EP 2 854 333 A1**
(43) Veröffentlichungstag der Anmeldung: **01.04.2015**
(21) Anmeldenummer: 13186630.3
(22) Anmeldetag: 30.09.2013
(51) Int. Cl.: H04L 12/24, H04W 24/02, H04L 12/28, G06F 15/177

(54) **Verfahren zur automatischen Konfiguration eines modularen Kommunikations- oder Automatisierungsgeräts und modulares Kommunikations- oder Automatisierungsgerät**

(71) Anmelder: Siemens Aktiengesellschaft, 80333 München (DE)
(72) Erfinder: Brühne, Marcus, 90537 Feucht (DE); Rotmensen, Sander, 90518 Altdorf b. Nürnberg (DE)

(57) **Zusammenfassung**

Zur automatischen Konfiguration eines modularen Kommunikations- oder Automatisierungsgeräts (100), das ein Grundmodul (101) und zumindest ein mit diesem verbindbares Erweiterungsmodul (121,122,123) umfaßt, wird ein Geräteidentifikator des Erweiterungsmoduls (121,122,123) bei Verbindung des Erweiterungsmoduls (121,122,123) mit dem Grundmodul (101) bzw. Initialisierung des Grundmoduls (101) mittels einer dem Grundmodul (101) zugeordneten Leseeinheit (112) aus einem Funk-Transponder am Erweiterungsmodul (121,122,123) ausgelesen. Der ausgelesene Geräteidentifikator wird durch die Steuerungseinheit (111) des Grundmoduls (101) auf eine zulässige Verbindung des Grundmoduls (101) mit dem durch den Geräteidentifikator bezeichneten Erweiterungsmodul (121,122,123) überprüft. Bei einem positiven Überprüfungsergebnis werden dem durch den Geräteidentifikator bezeichneten Erweiterungsmodul (121,122,123) zugeordnete Modulkonfigurationsdaten abgerufen und durch die Steuerungseinheit (111) des Grundmoduls (101) zur Konfiguration des Grundmoduls (101) aktiviert.

## Beschreibung

Die vorliegende Erfindung betrifft eine automatische Konfiguration eines modularen Kommunikations- oder Automatisierungsgeräts, insbesondere in einem industriellen Automatisierungssystem. Ein industrielles Automatisierungssystem umfaßt üblicherweise eine Vielzahl von über ein industrielles Kommunikationsnetz miteinander vernetzten Kommunikations- sowie Automatisierungsgeräten und dient im Rahmen einer Fertigungs- oder Prozeßautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

An Kommunikationsgeräten, Automatisierungsgeräten mit Kommunikationsnetzschnittstelle oder sonstigen Infrastrukturgeräten sind üblicherweise Leuchtdioden zur Signalisierung von Zustands- oder Fehlerinformationen gut sichtbar auf einer Vorderseite vorgesehen. Zur eingehenden Diagnose von signalisierten Zustands- oder Fehlerinformationen und zur Konfiguration von modularen Geräten werden häufig rechnerbasierte Diagnosegeräte verwendet, die mit einem zu überwachenden oder konfigurierenden Infrastrukturgerät gekoppelt werden. Alternativ zu einer Signalisierung von Zustands- oder Fehlerinformationen mittels Leuchtdioden werden hierfür zunehmend auch kleine Displays an Infrastrukturgeräten verwendet, die eine Darstellung aussagekräftigerer Informationen ermöglichen. Auf solchen Displays können beispielsweise Gerätetyp oder Konfigurationsinformationen eines Infrastrukturgeräts dargestellt werden.

Aus DE 101 10 776 A1 ist ein Verfahren bekannt, das zur Zuordnung einer mobilen elektronischen Bedien- bzw. Beobachtungseinrichtung zu einer Maschine oder einem Maschinenteil dient. Dabei wird in einem Zuordnungs- bzw. Anmeldeprozeß zwischen der Bedien- bzw. Beobachtungseinrichtung und einer korrespondierenden Gegensteile an der jeweiligen Maschine mittels Schnittstellen zur gerichteten drahtlosen Anpeilung der korrespondierenden Gegenstelle eine eindeutige Zuordnungs- bzw. Anmeldeverbindung aufgebaut. Alternativ dazu kann mittels in Sendereichweite bzw. Empfangsempfindlichkeit abgestimmten Sende- bzw. Empfangseinrichtungen mit einem begrenzten örtlichen Funktions- bzw. Wirkungsbereich eine eindeutige Zuordnungs- bzw. Anmeldeverbindung aufgebaut werden. Nach erkannter und erfolgter Zuordnung wird eine Bedienung bzw. Beobachtung der Maschine bzw. des Maschinenteils über ein anderes standardmäßig vorgesehenes Datenübertragungsmittel vorgenommen. Dies kann beispielsweise über eine feste Vernetzung bzw. über eine drahtlose Verbindung zwischen der Bedien- bzw. Beobachtungseinrichtung und der ausgewählten Maschine erfolgen.

In KR20080301307A ist ein Auslesen von Kommunikationsgeräteadressen mittels RFID-Tags beschrieben. Ein LED-basiertes Verfahren zur Übertragung von Konfigurationsinformationen von Kommunikationsnetz-Infrastrukturgeräten ist aus der älteren europäischen Patentanmeldung mit dem Anmeldeaktenzeichen 12186084.5 bekannt. Konfigurationsinformationen werden als überlagerte codierte Symbolsequenz durch zumindest eine vorgegebene Leuchtdiode zusätzlich zu angezeigten Geräte- oder Kommunikationsstatusinformationen signalisiert. Die zumindest eine vorgegebene Leuchtdiode, welche die Konfigurationsinformationen signalisiert, wird anhand einer Codierung der die Konfigurationsinformationen umfassenden Symbolsequenz durch ein Diagnosegerät identifiziert. Die zumindest eine identifizierte Leuchtdiode wird mittels einer Kamera des Diagnosegeräts optisch abgetastet. Aus einer abgetasteten codierten Symbolsequenz werden die Konfigurationsinformationen durch das Diagnosegerät ermittelt.

Aus der älteren europäischen Patentanmeldung EP 13183908.6 ist ein Verfahren zur Übertragung von Konfigurationsinformationen zwischen einem an ein Kommunikationsnetz angeschlossenen Infrastrukturgerät und einem Diagnosegerät bekannt. Dabei sind die Konfigurationsinformationen dem an das Kommunikationsnetz angeschlossenen Infrastrukturgerät zugeordnet. Die Konfigurationsinformationen werden als überlagerte codierte Symbolsequenz durch zumindest eine vorgegebene Leuchtdiode zusätzlich zu angezeigten Geräte- oder Kommunikationsstatusinformationen signalisiert. Die zumindest eine vorgegebene Leuchtdiode, welche die Konfigurationsinformationen signalisiert, wird anhand einer Codierung der die Konfigurationsinformationen umfassenden Symbolsequenz durch ein Diagnosegerät identifiziert. Die zumindest eine identifizierte Leuchtdiode wird mittels einer Kamera des Diagnosegeräts optisch abgetastet. Aus einer abgetasteten codierten Symbolsequenz werden die Konfigurationsinformationen durch das Diagnosegerät ermittelt.

In der älteren europäischen Patentanmeldung EP 12199668.0 ist ein Verfahren zur Übertragung von Konfigurationsinformationen zwischen einem an ein Kommunikationsnetz angeschlossenen Infrastrukturgerät und einem Diagnosegerät beschrieben, bei dem die Konfigurationsinformationen durch eine Steuerungseinheit, die einem Koppelelement des Infrastrukturgeräts zugeordnet ist, ausgelesen und an zumindest einem Anschluß des Infrastrukturgeräts bereitgestellt werden. Die Konfigurationsinformationen werden zyklisch bzw. ereignisabhängig an ein Speicherelement eines mit einem Anschluß des Infrastrukturgeräts verbundenen Steckermoduls übertragen und dort gepuffert. Die im Speicherelement des Steckermoduls gepufferten Konfigurationsinformationen werden durch ein Diagnosegerät über eine Drahtlos-Kommunikationsschnittstelle zwischen dem Steckermodul und dem Diagnosegerät abgerufen.

Infrastrukturgeräte innerhalb eines Kommunikationsnetzes, wie WLAN-Systeme in industriellen Automatisierungssystemen, umfassen neben einem Grundmodul ergänzbares Zubehör, wie Antennenanschlusskabel, Antennen, Blitzschutz oder Schaltschrankdurchführungen. Bei WLAN-Systemen beispielsweise hat ergänztes Zubehör großen Einfluss auf eine abgegebene Sendeleistung, deren Maximalwert beispielsweise gesetzlichen Anforderungen genügen muß. Für eine korrekte Ermittlung einer maximalen Sendeleistung muß ergänztes Zubehör zuverlässig und vollständig erfaßt werden. Entsprechend bisherigen Lösungen wird ergänztes Zubehör manuell durch Benutzereingabe erfaßt. Dies ist zeitaufwendig und fehleranfällig, zumal ergänztes Zubehör häufig an schlecht zugänglichen Stellen installiert ist und daher bei einer Erfassung übersehen werden kann.

Der vorliegenden Erfindung liegt die Aufgabe zugrunde, ein zuverlässiges und einfach zu realisierendes Verfahren zur automatischen Konfiguration eines modularen Kommunikations- bzw. Automatisierungsgeräts zu schaffen sowie eine geeignete technische Realisierung anzugeben.

Diese Aufgabe wird erfindungsgemäß durch ein Verfahren mit den in Patentanspruch 1 angegebenen Merkmalen und durch ein modulares Kommunikations- oder Automatisierungsgerät mit den in Patentanspruch 7 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur automatischen Konfiguration eines modularen Kommunikations- oder Automatisierungsgeräts umfaßt das Kommunikations- oder Automatisierungsgerät ein Grundmodul und zumindest ein mit diesem über eine Nutz- bzw. Steuerungssignalschnittstelle verbindbares Erweiterungsmodul, dessen Geräteparameter für eine Konfiguration einer Steuerungseinheit des Grundmo duls verwendet werden. Am zumindest einen Erweiterungsmodul ist ein Funk-Transponder mit einer zugeordneten Speichereinheit vorgesehen, in der zumindest ein Geräteidentifikator des Erweiterungsmoduls gespeichert ist. Der Funk-Transponder ist vorzugsweise als Near Field Communication (NFC) Tag oder als Radio-Frequency Identification (RFID) Tag ausgestaltet. Bei Verbindung des Erweiterungsmoduls mit dem Grundmodul bzw. Initialisierung des Grundmoduls wird der Geräteidentifikator mittels einer dem Grundmodul zugeordneten Leseeinheit ausgelesen. Der ausgelesene Geräteidentifikator wird durch die Steuerungseinheit des Grundmoduls auf eine zulässige Verbindung des Grundmoduls mit dem durch den Geräteidentifikator bezeichneten Erweiterungsmodul überprüft. Bei einem positiven Überprüfungsergebnis werden dem durch den Geräteidentifikator bezeichneten Erweiterungsmodul zugeordnete Modulkonfigurationsdaten abgerufen und durch die Steuerungseinheit des Grundmoduls zur Konfiguration des Grundmoduls aktiviert werden. Auf diese Weise ist eine schnelle und zuverlässige automatische Konfiguration des modularen Kommunikations- oder Automatisierungsgeräts gewährleistet.

Die Modulkonfigurationsdaten werden beispielsweise durch ein über ein Kommunikationsnetz mit dem Kommunikations- oder Automatisierungsgerät verbundenes Projektierungssystem bereitgestellt. Auf diese Weise ist eine bequeme Verwendung vordefinierter bzw. auf Konsistenz geprüfter Konfigurationsdaten möglich.

Die die Leseeinheit kann beispielsweise in das Grundmodul integriert sein. Alternativ dazu kann die Leseeinheit in ein mit dem Grundmodul verbindbares Diagnosegerät integriert sein. In diesem Fall ruft das Diagnosegerät die Modulkonfigurationsdaten vorzugsweise von einem Projektierungssystem ab und übermittelt diese an das Grundmodul.

Das erfindungsgemäße modulare Kommunikations- oder Automatisierungsgerät umfaßt ein Grundmodul und zumindest ein mit diesem über eine Nutz- bzw. Steuerungssignalschnittstelle verbindbares Erweiterungsmodul, dessen Geräteparameter für eine Konfiguration einer Steuerungseinheit des Grundmoduls vorgesehen sind. Am zumindest einen Erweiterungsmodul ist ein Funk-Transponder mit einer zugeordneten Speichereinheit vorgesehen, in der zumindest ein Geräteidentifikator des Erweiterungsmoduls gespeichert ist. Der Funk-Transponder ist vorzugsweise als Near Field Communication (NFC) Tag oder als Radio-Frequency Identification (RFID) Tag ausgestaltet. Der Geräteidentifikator ist bei Verbindung des Erweiterungsmoduls mit dem Grundmodul bzw. Initialisierung des Grundmoduls mittels einer dem Grundmodul zugeordneten Leseeinheit auslesbar. Die Steuerungseinheit des Grundmoduls ist dafür ausgestaltet und eingerichtet ist, daß der ausgelesene Geräteidentifikator auf eine zulässige Verbindung des Grundmoduls mit dem durch den Geräteidentifikator bezeichneten Erweiterungsmodul überprüft wird. Darüber hinaus ist die Steuerungseinheit dafür ausgestaltet und eingerichtet, daß dem durch den Geräteidentifikator bezeichneten Erweiterungsmodul zugeordnete Modulkonfigurationsdaten bei einem positiven Überprüfungsergebnis abgerufen und zur Konfiguration des Grundmoduls aktiviert werden.

Entsprechend einer bevorzugten Ausgestaltung des modularen Kommunikations- oder Automatisierungsgeräts ist die Steuerungseinheit des Grundmoduls dafür ausgestaltet und eingerichtet, daß die Modulkonfigurationsdaten von einem über ein Kommunikationsnetz mit dem Kommunikations- oder Automatisierungsgerät verbundenes Projektierungssystem abgerufen werden. Des weiteren kann die Leseeinheit kann beispielsweise in das Grundmodul integriert sein. Alternativ dazu kann die Leseeinheit in ein mit dem Grundmodul verbindbares Diagnosegerät integriert sein. In diesem Fall ist das Diagnosegerät vorzugsweise dafür ausgestaltet und eingerichtet, daß die Modulkonfigurationsdaten von einem Projektierungssystem abgerufen und an das Grundmodul übermittelt werden.

Die vorliegende Erfindung wird nachfolgend an Ausführungsbeispielen anhand der Zeichnung näher erläutert. Es zeigt
- Figur 1: einen modularen WLAN-Access-Point,
- Figur 2-5: eine schematische Darstellung einer Ermittlung und Konfiguration von Erweiterungsmodulen eines modularen Kommunikationsgeräts.

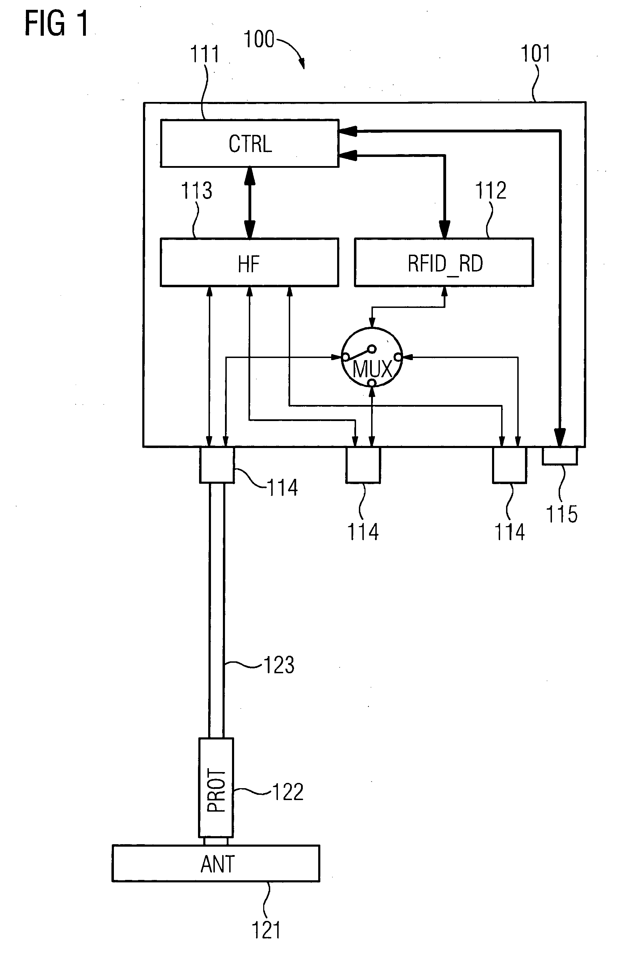

In Figur 1 ist beispielhaft für ein modulares Kommunikations- oder Automatisierungsgerät ein WLAN-Access-Point 100 dargestellt, der ein Grundmodul 101 und mehrere mit diesem über Nutz- bzw. Steuerungssignalschnittstellen 114, 115 verbindbare Erweiterungsmodule 121-123 umfaßt. Die Nutz- bzw. Steuerungssignalschnittstellen sind im vorliegenden Ausführungsbeispiel mittels Antennenbuchsen 114 und einer Ethernet-Buchse 115 realisiert. Die Antennenbuchsen 114 sind über ein WLAN-HF-Modul 113 mit einer Steuerungseinheit 111 des Grundmoduls 101 verbunden. Zusätzlich sind die Antennenbuchsen 114 über einen Multiplexer mit einem RFID-Lesegerät 112 verbunden, das ebenfalls an die Steuerungseinheit 111 angeschlossen ist. Den Erweiterungsmodulen 121-123 sind Geräteparameter zugeordnet, die für eine Konfiguration der Steuerungseinheit 111 des Grundmoduls 101 verwendet werden. Bei den Erweiterungsmodulen handelt es sich im vorliegenden Ausführungsbeispiel um eine WLAN-Antenne 121, einen Blitzschutz 122 und ein Antennenkabel 123. Diese Erweiterungsmodule wirken sich deutlich auf eine Sendeleistung des WLAN-Access-Point 100 aus und sind dementsprechend für eine Konfiguration der Steuerungseinheit 111 zu berücksichtigen.

An den Erweiterungsmodulen 121-123 ist jeweils ein Funk-Transponder mit einer zugeordneten Speichereinheit vorgesehen, der im vorliegenden Ausführungsbeispiel als RFID-Tag ausgeführt ist. In der jeweiligen Speichereinheit ist zumindest ein Geräteidentifikator des zugeordneten Erweiterungsmoduls 121-123 gespeichert. Der Geräteidentifikator ist bei Verbindung des jeweiligen Erweiterungsmoduls 121-123 mit dem Grundmodul 101 bzw. bei Initialisierung des Grundmoduls 101 mittels des in das Grundmodul 101 integrierten RFID-Lesegeräts 112 auslesbar. Dabei ist die Steuerungseinheit 111 derart ausgestaltet und eingerichtet, daß der ausgelesene Geräteidentifikator auf eine zulässige Verbindung des Grundmoduls 101 mit dem jeweiligen durch den Geräteidentifikator bezeichneten Erweiterungsmodul 121-123 überprüft wird. Außerdem ist die Steuerungseinheit 111 dafür ausgestaltet und eingerichtet, daß dem jeweiligen durch den Geräteidentifikator bezeichneten Erweiterungsmodul 121-123 zugeordnete Modulkonfigurationsdaten bei einem positiven Überprüfungsergebnis abgerufen und zur Konfiguration des Grundmoduls 101 aktiviert werden. Die Modulkonfigurationsdaten werden im vorliegenden Ausführungsbeispiel durch ein über ein Kommunikationsnetz mit dem WLAN-Access-Point 100 verbundenes Projektierungssystem bereitgestellt.

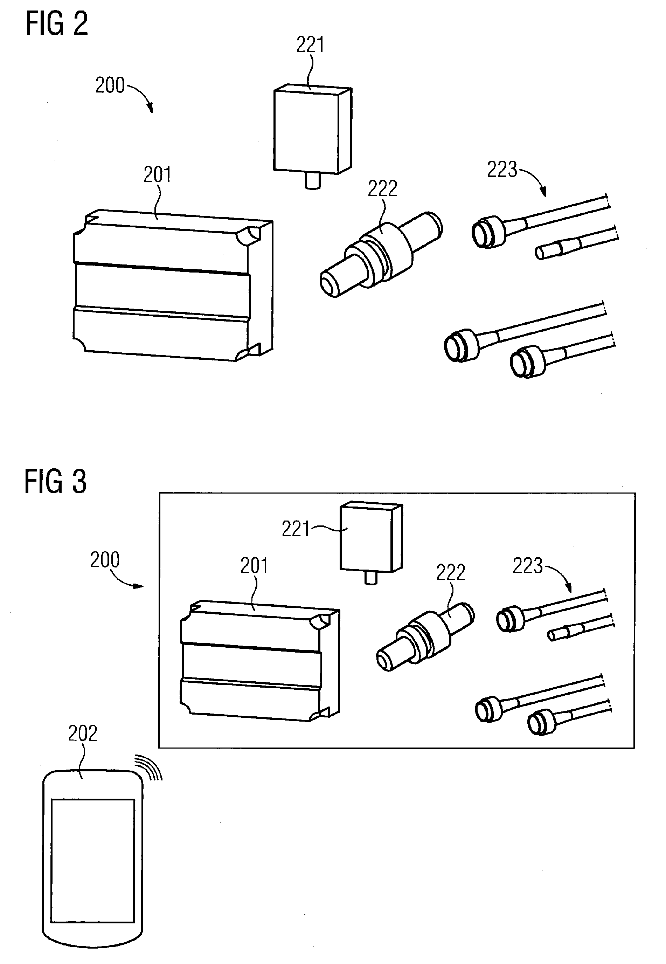

Die Figuren 2 bis 5 stellen schematisch eine Ermittlung und Konfiguration von Erweiterungsmodulen 221-223 eines modularen Kommunikationsgeräts 200 mit einem Grundmodul 201 dar. Wie zuvor ist das modulare Kommunikationsgerät auch im vorliegenden Ausführungsbeispiel ein WLAN-Access-Point 200. Bei den Erweiterungsmodulen handelt es sich um eine WLAN-Antenne 221, einen Blitzschutz 222 und Antennenkabel 223. Am Grundmodul 201 und an den Erweiterungsmodulen 221-223 sind jeweils NFC-Tags angeordnet, in denen jeweils ein Geräteidentifikator gespeichert ist. Die jeweiligen Geräteidentifikatoren werden entsprechend Figur 3 mittels eines mit dem Grundmodul 201 verbindbaren Diagnosegeräts 202 ausgelesen, das ein integriertes NFC-Lesegerät umfaßt. Im vorliegenden Ausführungsbeispiel ist das Diagnosegerät 202 auf Grundlage eines Smartphones realisiert, auf dem eine Konfigurations- und Diagnose-App installiert ist.

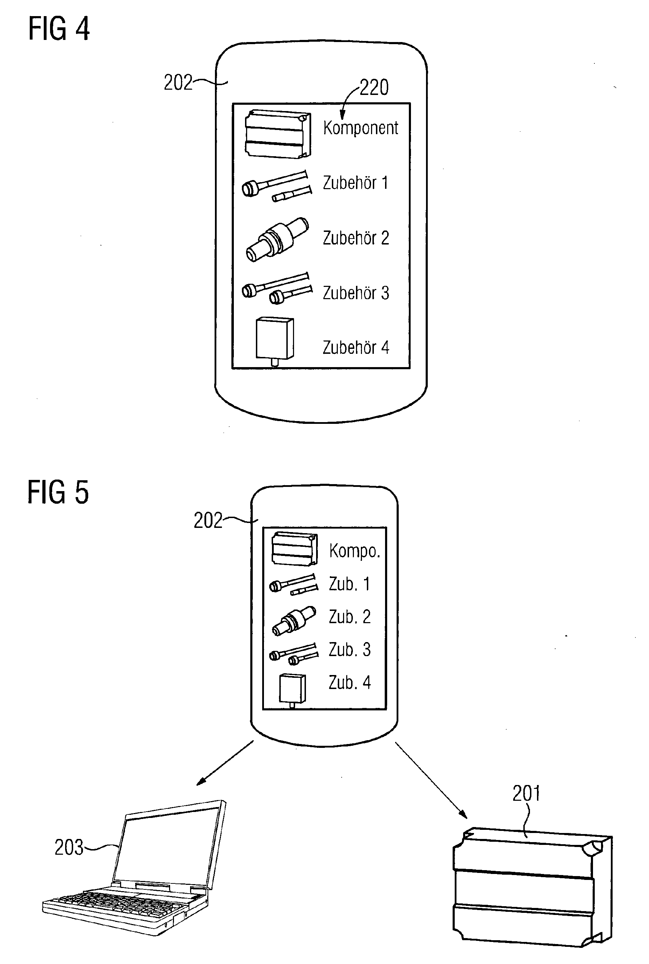

Nach Erfassen des Grundmoduls 201 und der Erweiterungsmodule 221-223 durch Auslesen der jeweiligen NFC-Tags, werden erkannte Module entsprechend Figur 4 für eine Dokumentation und Benutzerkontrolle an einer graphischen Benutzeroberfläche 220 des Diagnosegeräts 202 dargestellt. Nach einer Benutzerbestätigung ruft das Diagnosegerät 202 die Modulkonfigurationsdaten entsprechend Figur 5 von einem Projektierungssystem 203 ab und übermittelt diese an das Grundmodul 201.

## Patentansprüche

1. Verfahren zur automatischen Konfiguration eines modularen Kommunikations- oder Automatisierungsgeräts, bei dem
- das Kommunikations- oder Automatisierungsgerät ein Grundmodul und zumindest ein mit diesem über eine Nutz- und/oder Steuerungssignalschnittstelle verbindbares Erweiterungsmodul umfaßt, dessen Geräteparameter für eine Konfiguration einer Steuerungseinheit des Grundmoduls verwendet werden,
- am zumindest einen Erweiterungsmodul ein Funk-Transponder mit einer zugeordneten Speichereinheit vorgesehen ist, in der zumindest ein Geräteidentifikator des Erweiterungsmoduls gespeichert ist,
- der Geräteidentifikator bei Verbindung des Erweiterungsmoduls mit dem Grundmodul und/oder Initialisierung des Grundmoduls mittels einer dem Grundmodul zugeordneten Leseeinheit ausgelesen wird,
- der ausgelesene Geräteidentifikator durch die Steuerungseinheit des Grundmoduls auf eine zulässige Verbindung des Grundmoduls mit dem durch den Geräteidentifikator bezeichneten Erweiterungsmodul überprüft wird,
- dem durch den Geräteidentifikator bezeichneten Erweiterungsmodul zugeordnete Modulkonfigurationsdaten bei einem positiven Überprüfungsergebnis abgerufen und durch die Steuerungseinheit des Grundmoduls zur Konfiguration des Grundmoduls aktiviert werden.

2. Verfahren nach Anspruch 1,
bei dem die Modulkonfigurationsdaten durch ein über ein Kommunikationsnetz mit dem Kommunikations- oder Automatisierungsgerät verbundenes Projektierungssystem bereitgestellt werden.

3. Verfahren nach einem der Ansprüche 1 oder 2,
bei dem der Funk-Transponder als Near Field Communication (NFC) Tag oder als Radio-Frequency Identification (RFID) Tag ausgestaltet ist.

4. Verfahren nach einem der Ansprüche 1 bis 3,
bei dem die Leseeinheit in das Grundmodul integriert ist.

5. Verfahren nach einem der Ansprüche 1 bis 3,
bei dem die Leseeinheit in ein mit dem Grundmodul verbindbares Diagnosegerät integriert ist.

6. Verfahren nach Anspruch 5,
bei dem das Diagnosegerät die Modulkonfigurationsdaten von einem Projektierungssystem abruft und an das Grundmodul übermittelt.

7. Modulares Kommunikations- oder Automatisierungsgerät mit
- einem Grundmodul und zumindest einem mit diesem über eine Nutz- und/oder Steuerungssignalschnittstelle verbindbaren Erweiterungsmodul, dessen Geräteparameter für eine Konfiguration einer Steuerungseinheit des Grundmoduls vorgesehen sind,
- einem am zumindest einen Erweiterungsmodul vorgesehenen Funk-Transponder mit einer zugeordneten Speichereinheit, in der zumindest ein Geräteidentifikator des Erweiterungsmoduls gespeichert ist,
- wobei der Geräteidentifikator bei Verbindung des Erweiterungsmoduls mit dem Grundmodul und/oder Initialisierung des Grundmoduls mittels einer dem Grundmodul zugeordneten Leseeinheit auslesbar ist,
- wobei die Steuerungseinheit des Grundmoduls dafür ausgestaltet und eingerichtet ist, daß der ausgelesene Geräteidentifikator auf eine zulässige Verbindung des Grundmoduls mit dem durch den Geräteidentifikator bezeichneten Erweiterungsmodul überprüft wird, und daß dem durch den Geräteidentifikator bezeichneten Erweiterungsmodul zugeordnete Modulkonfigurationsdaten bei einem positiven Überprüfungsergebnis abgerufen und zur Konfiguration des Grundmoduls aktiviert werden.

8. Modulares Kommunikations- oder Automatisierungsgerät nach Anspruch 7,
bei dem die Steuerungseinheit des Grundmoduls dafür ausgestaltet und eingerichtet ist, daß die Modulkonfigurationsdaten von einem über ein Kommunikationsnetz mit dem Kommunikations- oder Automatisierungsgerät verbundenes Projektierungssystem abgerufen werden.

9. Modulares Kommunikations- oder Automatisierungsgerät nach einem der Ansprüche 7 oder 8,
bei dem der Funk-Transponder als Near Field Communication (NFC) Tag oder als Radio-Frequency Identification (RFID) Tag ausgestaltet ist.

10. Modulares Kommunikations- oder Automatisierungsgerät nach einem der Ansprüche 7 bis 9,
bei dem die Leseeinheit in das Grundmodul integriert ist.

11. Modulares Kommunikations- oder Automatisierungsgerät nach einem der Ansprüche 7 bis 9,
bei dem die Leseeinheit in ein mit dem Grundmodul verbindbares Diagnosegerät integriert ist.

12. Modulares Kommunikations- oder Automatisierungsgerät nach Anspruch 11,
bei dem das Diagnosegerät dafür ausgestaltet und eingerichtet ist, daß die Modulkonfigurationsdaten von einem Projektierungssystem abgerufen und an das Grundmodul übermittelt werden.
